# EUROPEAN PATENT APPLICATION

(11) **EP 2 897 413 A1**
(43) Date of publication of application: **22.07.2015**
(21) Application number: 14187736.5
(22) Date of filing: 06.10.2014
(51) Int. Cl.: H04W 36/04, H04W 36/00, H04W 84/04

(54) **Method for transceiving handover message during connection of plural LTE base stations**

(30) Priority: 04.10.2013 KR 20130118275; 06.03.2014 KR 20140026613; 05.09.2014 KR 20140119298
(71) Applicant: Humax Holdings Co., Ltd., Yongin-si 449-934 (KR)
(72) Inventor: Yie, Alex Chungku, 403-762 Incheon (KR); Lee, Yongjae, 463-918 Seongnam-si (KR); Kim, Hui, 472-877 Namyangju-si (KR); Ahn, Jun Bae, 464-704 Gwangju-si (KR)
(74) Representative: Zardi, Marco

(57) **Abstract**

Disclosed herein is a scheme for transmitting a handover message of a terminal when a macro cell base station that can be applied to a small cell cluster environment and a small cell base station simultaneously provide services in a heterogeneous network, and a method for transceiving a handover message through any one of the macro base station and the small cell base station.

## Description

### BACKGROUND OF THE INVENTION

### Field of the Invention

Exemplary embodiments of the present invention relate to a heterogeneous network, and more particularly, to a scheme for transmitting a handover message of a terminal when a macro cell base station that can be applied to a small cell cluster environment and a small cell base station simultaneously provide services. That is, exemplary embodiments of the present invention relate to a method for transceiving a handover message during connection of a plurality of LTE base stations, which can transceive the handover message with any one of the macro cell base station and the small cell base station.

### Description of the Related Art

A wireless mobile network includes a plurality of base stations to provide a seamless wireless communication service to a wireless communication terminal having mobility. Each base station operates one cell and performs wireless communication with a wireless communication terminal that is positioned in the corresponding cell.

When a wireless communication terminal moves from one cell to another cell, handover occurs in a manner that a base station of a target cell establishes communication with the wireless communication terminal, and a based station of a source cell terminates the communication with the wireless communication terminal. Through the handover, the wireless mobile network provides a seamless wireless communication service to the wireless communication terminal.

Unlike an existing macro cell that has high transmission power and wide coverage, a small cell has low transmission power and narrow coverage. For example, the small cell is a low-power wireless access node having a range of 10 m to 1 or 2 km.

In general, low-output base station equipment having antennas in the class of 10W or less, a pico cell, and a femto cell are commonly called a small cell. The equipment provides stable wireless environment with respect to small space.

Network service providers perform mobile data offloading by using small cells corresponding to increasing mobile data traffics. It is known it is efficient to perform data offloading using the small cells together rather than simply using the macro cell.

### SUMMARY OF THE INVENTION

An object of the present invention is to provide a method for a user terminal to discover a small cell in a cluster in a small cell environment that is managed by the cluster, and a method for transceiving a handover message during connection of a plurality of LTE base stations, which can transceive the handover message with a terminal when a macro cell base station and a small cell base station simultaneously provide services to the terminal.

Another object of the present invention is to provide a method for transceiving a handover message during connection of a plurality of LTE base stations, which can transceive the handover message between any one of a macro cell base station and a small cell base station and a terminal.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a method for transceiving a handover message during connection of a plurality of LTE base stations includes storing information of small cells in a small cell cluster; receiving a request for cluster information from a terminal; and transmitting the information of the small cells in the cluster to the terminal.

The providing of the small cell information may be performed by a master object of the small cell cluster.

In accordance with another aspect of the present invention, a method for transceiving a handover message during connection of a plurality of LTE base stations in a cell discovery method in a small cell cluster that is composed of a plurality of small cells and a master object, includes a terminal receiving information of the small cells in the small cell cluster; and the terminal connecting to the small cell in the cluster using the information of the small cells.

The receiving of the information of the small cells in the small cell cluster may include receiving the information of the small cells from the master object of the small cell cluster.

The connecting to the small cell in the cluster using the information of the small cell may include connecting to the small cell in the cluster in preference to a macro cell.

In accordance with still another aspect of the present invention, a method for transceiving a handover message during connection of a plurality of LTE base stations includes a user terminal, which is connected to at least one of a macro base station that provides an LTE service in a macro cell and a small cell base station that provides the LTE service in a small cell to receive the LTE service, transceiving a handover message through any one of the macro base station and the small cell base station.

According to the method for transceiving a handover message during the connection of the plurality of LTE base stations as described above, the handover-related control signal, which is transmitted from the user terminal to the small cell and the macro cell, can be omitted. Further, in the case where the macro base station and the small cell base station simultaneously provide the services to the terminal in the small cell environment that is managed by the cluster, the handover message is transceived between any one of the macro cell base station and the small cell base station and the terminal through transreception of the handover message with the terminal, and thus the handover can be efficiently performed.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a conceptual diagram illustrating a deployment of small cells and macro cells;
FIG. 2 is a conceptual diagram illustrating a deployment of a small cell cluster and a macro cell;
FIG. 3 is a conceptual diagram illustrating a deployment of small cells and a macro cell according to scenario 1;
FIG. 4 is a conceptual diagram illustrating a deployment of small cells and a macro cell according to scenario 2a;
FIG. 5 is a conceptual diagram illustrating a deployment of small cells and a macro cell according to scenario 2b;
FIG. 6 is a conceptual diagram illustrating a deployment of small cells and a macro cell according to scenario 3;
FIG. 7 is a conceptual diagram illustrating a small cell discovery method according to an embodiment of the present invention;
FIG. 8 is a flowchart illustrating a small cell discovery method according to an embodiment of the present invention;
FIG. 9 is a conceptual diagram illustrating a small cell discovery method according to another embodiment of the present invention;
FIG. 10 is a flowchart illustrating a small cell discovery method according to another embodiment of the present invention;
FIG. 11 is a conceptual diagram illustrating a small cell discovery method according to still another embodiment of the present invention;
FIG. 12 is a flowchart illustrating a small cell discovery method according to still another embodiment of the present invention;
FIG. 13 is a conceptual diagram illustrating a small cell discovery method according to yet still another embodiment of the present invention;
FIG. 14 is a flowchart illustrating a small cell discovery method according to yet still another embodiment of the present invention;
FIG. 15 is a configuration diagram in which a macro base station and a small cell base station provide LTE services to a user terminal according to yet still another embodiment of the present invention; and
FIG. 16 is a timing diagram illustrating in detail a handover message that a user terminal of FIG. 15 transceives with a macro base station and a small cell base station.

### DESCRIPTION OF SPECIFIC EMBODIMENTS

The present invention may be modified in various ways and may have various embodiments. Specific embodiments will be exemplarily illustrated in the drawings and will be described in detail in the detailed description.

However, this is not intended to limit the present invention to the specific embodiments, and it would be understood by one of ordinary skill in the art that a variety of equivalents, modifications, and replacements of the embodiments are included in the idea and technical range of the present invention.

Although the terms "first, second, and so forth" are used to describe diverse constituent elements, such constituent elements should not be limited by the terms. The terms are used only to discriminate one constituent element from another constituent element. For example, a first constituent element may be called a second constituent element without deviating from the scope of the present invention, and in a similar manner, the second constituent element may be called the first constituent element. The term "and/or" includes the respective described items and combinations thereof.

The term "connected to" or "coupled to" that is used to designate a connection or coupling of one element to another element includes both a case that an element is "directly connected or coupled to" another element and a case that an element is connected or coupled to another element via still another element. In this case, the term "directly connected to" or "directly coupled to" means that an element is connected or coupled to another element without intervention of any other element.

In the following description of the present invention, the terms used are for explaining embodiments of the present invention, but do not limit the scope of the present invention. In the description, a singular expression may include a plural expression unless specially described. The term "comprises" and/or "made of" used in the description means existence of one or more other features, numerals, steps, operations, constituent elements, components, and/or a combination thereof, and thus it should be understood that possible existence or addition of one or more other features, numerals, steps, operations, constituent elements, components, and/or a combination thereof is not pre-excluded.

Unless differently defined, all terms (including technical and scientific terms) used in the description could be used as meanings commonly understood by those ordinary skilled in the art to which the present invention belongs. Terms that are generally used but are not defined in the dictionary are not interpreted ideally or excessively unless they have been clearly and specially defined.

Hereinafter, preferred embodiments of the present invention will be described in more detail with reference to the accompanying drawings. In the entire description of the present invention, for easy understanding thereof, the same drawing reference numerals are used for the same elements across various figures, and duplicate explanation of the same constituent elements will be omitted.

A small cell discovery method according to an embodiment of the present invention includes a signaling method for a user terminal to discover small cells in a cluster in a structure in which the small cells are tied up in the cluster and a master object controls the small cell cluster.

For example, the present invention can be applied to a case where small cells are deployed under an LTE broadband network or a 3G WCDMA network. For example, the small cells may be deployed by stairs in a building. Further, the small cells may be managed in a cluster method.

Each cluster has at least one master object. The master object is connected to a backbone. The master object is connected to respective small cells that belong to the cluster. The master object and the respective small cells may be connected to each other by wire or wirelessly. The master object may transmit only a control signal to the small cells, but may not transmit data.

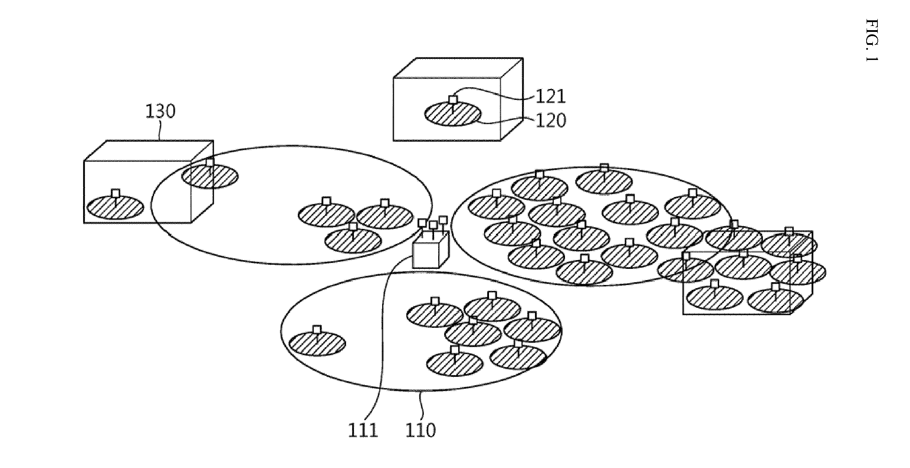

FIG. 1 is a conceptual diagram illustrating a deployment of small cells and macro cells.

FIG. 1 conceptually illustrates a macro base station 111, macro cells 110, a small cell base station 121, and small cells 120. The small cells 120 may exist to be overlaid with each other on the macro cell 110, or may exist independently of the macro cell. Further, the small cells 120 may be positioned indoors or outdoors. The small cells that are positioned indoors appear to be positioned in a cuboid 130 that indicates indoors. The technology to use small cells deals with indoor and outdoor scenarios, and can use a low-power node.

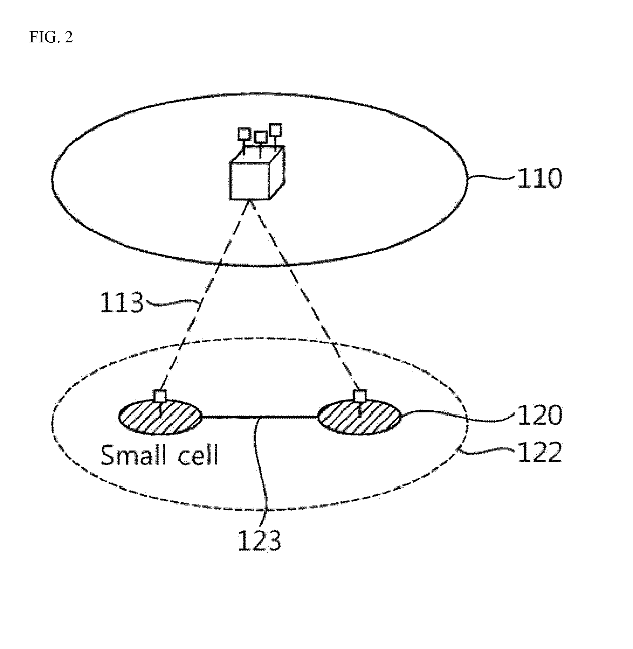

FIG. 2 is a conceptual diagram illustrating a deployment of a small cell cluster and a macro cell. FIG. 2 conceptually illustrates a deployment of small cells and a macro cell in various scenarios to be explained below. Referring to FIG. 2, a macro cell 110 may be provided, or may not be provided. For example, small cells 120 may be deployed together with the macro cell 110, or may be solely deployed without the macro cell 110. The small cells 120 may be provided to constitute a cluster 122. The cluster 122 is a set of small cells and conceptually forms the small cells as one group. The macro base station 111 and the small cell base station 121 may be connected through a first backhaul 113 to exchange data with each other. Further, the small cell base station 121 is connected to the macro base station 111 through an IP network to exchange data with the macro base station 111. For example, the small cell may be a pico cell or a femto cell. If the small cell is composed of a pico cell, the macro base station and the pico cell base station may be connected through the first backhaul to exchange data with each other. If the small cell is composed of a femto cell, the femto cell base station is connected to the macro base station through the IP network to exchange data with each other.

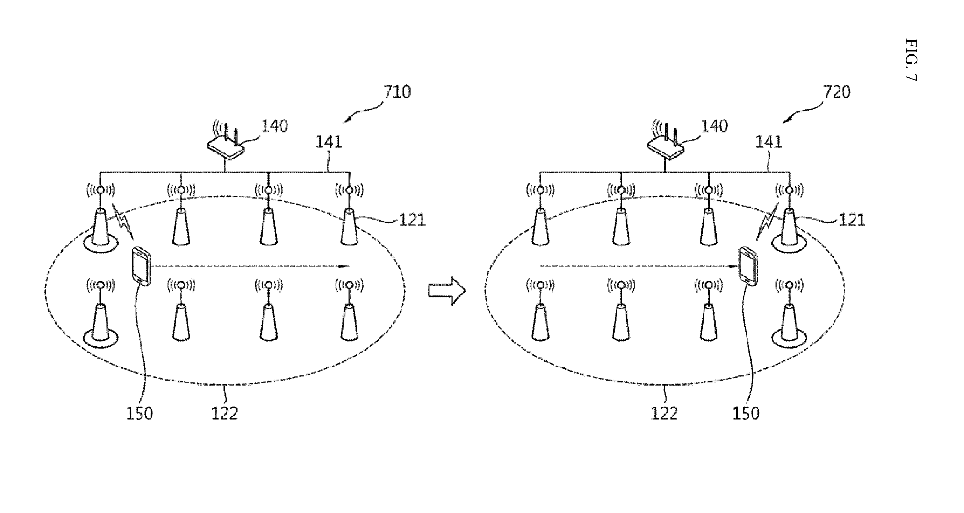

The small cell base stations 121 in the cluster 122 may also be connected through a second backhaul 123 to exchange data with each other. Further, in another embodiment, the small cell base stations 121 in the cluster 122 may exchange data with each other using the first backhaul. In this case, the small cell base stations 121 may exchange data with each other via the macro cell 110. In another embodiment, to be described later as an example of FIG. 7, the cluster 122 may be provided with a master object, and the small cells in the cluster 122 may exchange data with each other via the master object.

The backhaul may be, for example, a transmission line or a network that is used to connect the small cells to a core network or a backbone network.

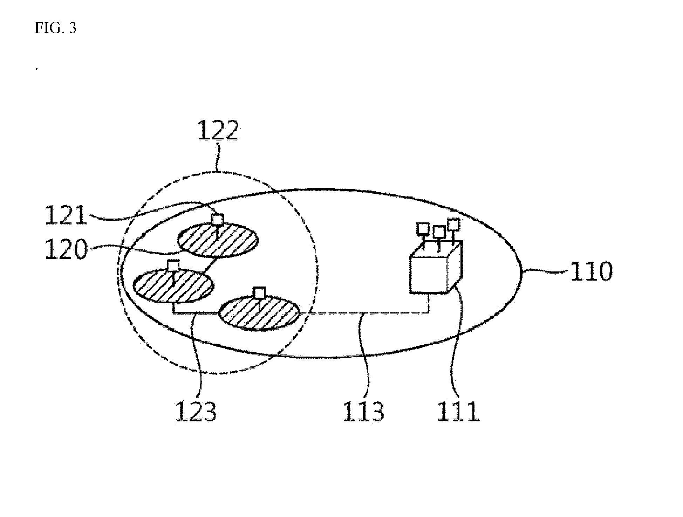

FIG. 3 is a conceptual diagram illustrating a deployment of small cells and a macro cell according to scenario 1. The configuration of a small cell system according to scenario 1 is as follows. Small cells are deployed on a macro network. Accordingly, coverage of small cells is overlaid in coverage of a macro cell. The macro cell and the small cell have a co-channel. The small cells are deployed outdoors. The small cell cluster may be considered. The small cells of the cluster are deployed more tightly than the deployment of the small cells that are considered in Rel-10 eICIC, Rel-11 FeICIC/CoMP. An ideal backhaul and a non-ideal backhaul may be considered with respect to an interface between the small cells in the same cluster and an interface between a small cell cluster and at least one macro eNB. A backhaul 123 with respect to the interface between the small cells in the same cluster and a backhaul 113 with respect to the interface between the small cell cluster and at least one macro eNB are illustrated in FIG. 3. The non-ideal backhaul is assumed with respect to all other interfaces. Users are all dispersed outdoors or indoors.

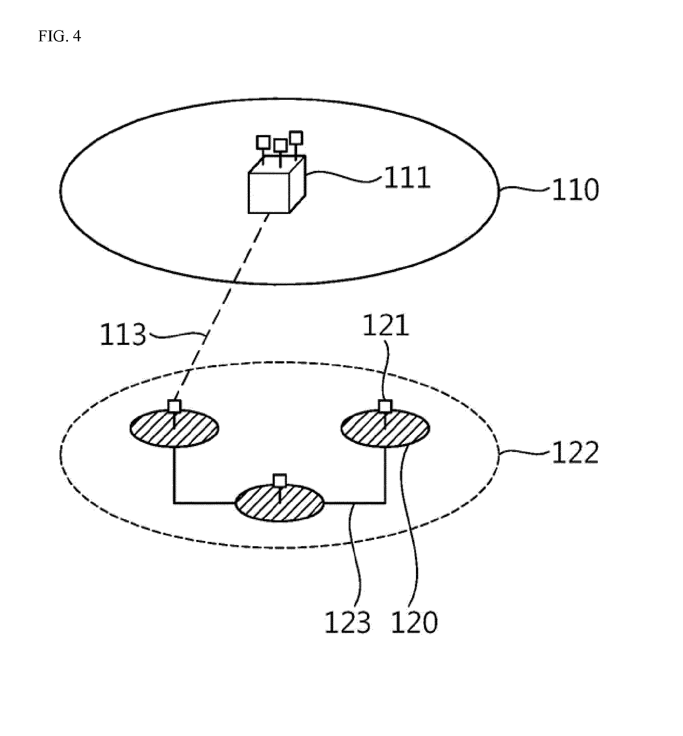

FIG. 4 is a conceptual diagram illustrating a deployment of small cells and a macro cell according to scenario 2a. The configuration of a small cell system according to scenario 2a is as follows. Small cells are deployed on a macro network. Accordingly, coverage of small cells is overlaid in coverage of a macro cell. The macro cell and the small cell have frequency deployments that are separated from each other. Since coverage of the small cells is overlaid with coverage of the macro cell, but the macro cell and the small cell have different frequency deployments, the macro cell 110 and the small cells 120 are separately illustrated in FIG. 4. The small cells are deployed outdoors. The small cell cluster may be considered. The small cells of the cluster are deployed more tightly than the deployment of the small cells that are considered in Rel-10 eICIC and Rel-11 FeICIC/CoMP. An ideal backhaul and a non-ideal backhaul may be considered with respect to an interface between the small cells in the same cluster and an interface between a small cell cluster and at least one macro eNB. A backhaul 123 with respect to the interface between the small cells in the same cluster and a backhaul 113 with respect to the interface between the small cell cluster and at least one macro eNB are illustrated. The non-ideal backhaul is assumed with respect to all other interfaces.

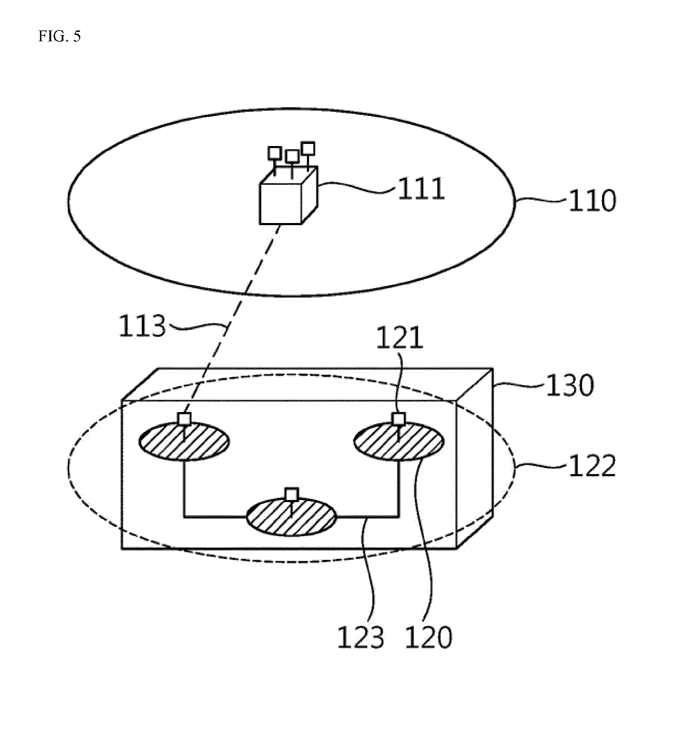

FIG. 5 is a conceptual diagram illustrating a deployment of small cells and a macro cell according to scenario 2b. The configuration of a small cell system according to scenario 2b is as follows. Small cells are deployed on a macro network. Accordingly, coverage of small cells is overlaid in coverage of a macro cell. The macro cell and the small cell have frequency deployments that are separated from each other. As small cells 120 are illustrated in a cuboid 130 that means a building, the small cells are deployed indoors. A small cell cluster 122 may be considered. The small cells of the cluster are deployed more tightly than the deployment of the small cells that are considered in Rel-10 eICIC and Rel-11 FeICIC/CoMP. An ideal backhaul and a non-ideal backhaul may be considered with respect to an interface between the small cells in the same cluster and an interface between a small cell cluster and at least one macro eNB. A backhaul 123 with respect to the interface between the small cells in the same cluster and a backhaul 113 with respect to the interface between the small cell cluster and at least one macro eNB are illustrated. The non-ideal backhaul is assumed with respect to all other interfaces.

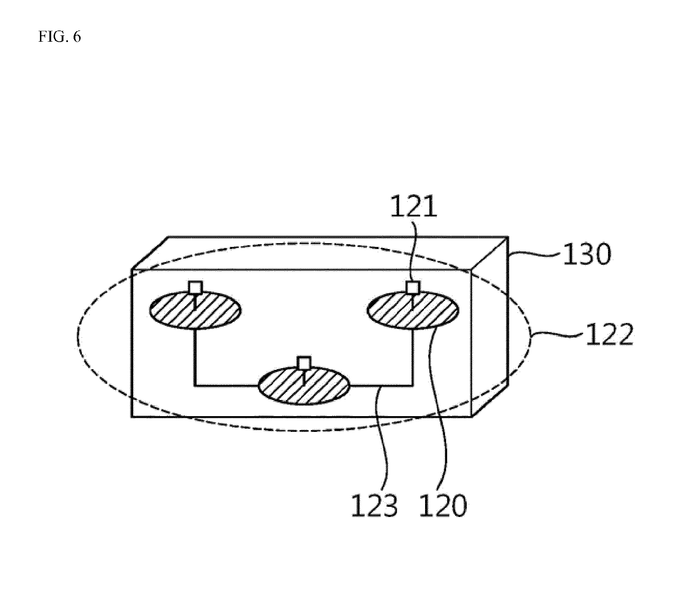

FIG. 6 is a conceptual diagram illustrating a deployment of small cells and a macro cell according to scenario 3. The configuration of a small cell system according to scenario 3 is as follows. Coverage of a macro cell is not provided. Small cells are deployed indoors. A small cell cluster is considered. The small cells of the cluster are deployed more tightly than the deployment of the small cells that are considered in Rel-10 eICIC and Rel-11 FeICIC/CoMP. Further, like an indoor hotspot that is considered in Rel-10, the small cells may be deployed at low density.

An ideal backhaul and a non-ideal backhaul may be considered with respect to an interface between the small cells in the same cluster. A backhaul with respect to the interface between the small cells in the same cluster is illustrated. The non-ideal backhaul is assumed with respect to all other interfaces.

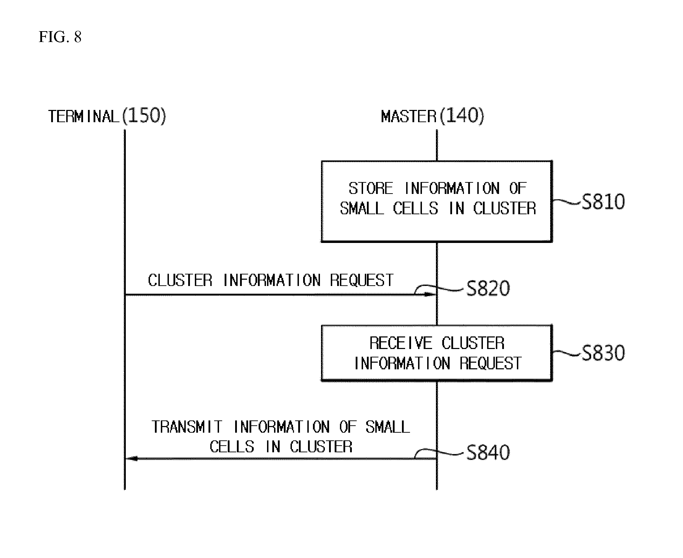

FIG. 7 is a conceptual diagram illustrating a small cell discovery method according to an embodiment of the present invention, and FIG. 8 is a flowchart illustrating a small cell discovery method according to an embodiment of the present invention. Referring to FIGS. 7 and 8, a small cell discovery method according to an embodiment of the present invention will be described.

FIG. 7 illustrates an embodiment of the present invention based on scenario 3 as described above. A cluster 122 has a master object 140 as described above. The master object 140 is connected to a backbone. The master object is connected to respective small cells that belong to the cluster 141. The master object 140 and the respective small cells 121 may be connected to each other by wire or wirelessly. The master object 140 may transmit only a control signal to the small cells, but may not transmit data. The small cells in the cluster 122 may exchange data with each other via the master object. In another embodiment, the small cells in the cluster 122 may have backhauls to exchange data with each other.

First, the master object 140 pre-stores information of the small cells in the cluster (S810). If the position of a user terminal 150 is changed from a first position 710 to a second position 720, the user terminal 150 receives a signal of the small cell that is connected to the user terminal 150 with weak signal strength in the first position, and receives a signal of another neighboring small cell with stronger signal strength in the second position. Accordingly, in order to make connection with a new small cell, the user terminal 150 requests information of the cluster from the master object (S820). The master object 140 receives the request for the cluster information from the user terminal 150 (S830). The master object 140 transmits the information of the small cells in the cluster to the user terminal 150 (S840). The user terminal 150 can connect to a new small cell using the received information of the small cells in the cluster.

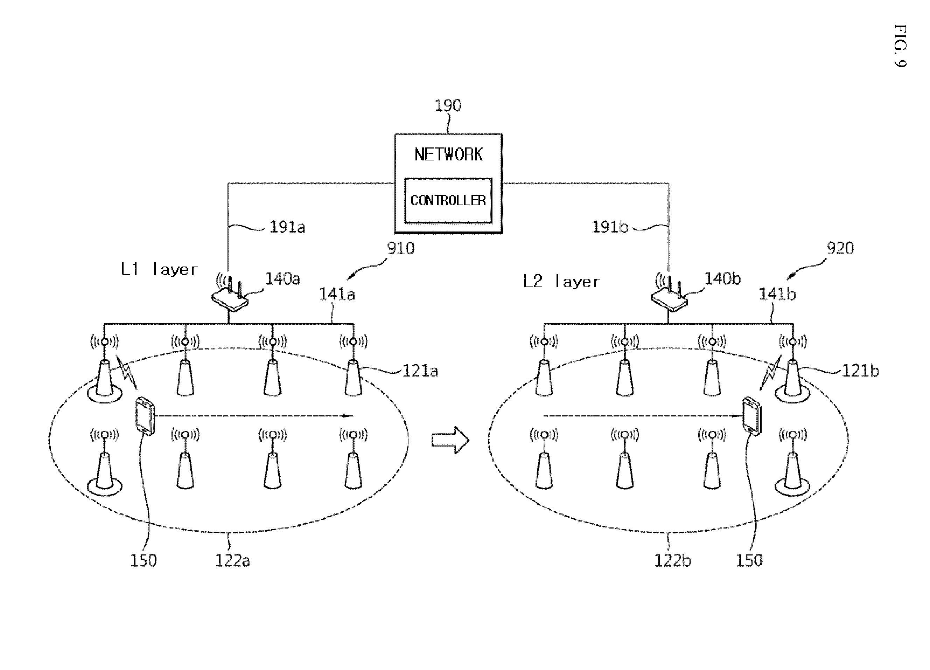

FIG. 9 is a conceptual diagram illustrating a small cell discovery method according to another embodiment of the present invention. The second embodiment corresponds to an example of a small cell discovery method that is applied when the user terminal changes the cluster to a new cluster based on scenario 3 as described above. FIG. 9 illustrates a first master object 140a, a first cluster 122a of small cells 121a, and the deployment thereof in a situation 910 that the user terminal 150 is positioned on a layer L1, and illustrates a second master object 140b, a second cluster 122b, and the deployment thereof in a situation 920 that the user terminal 150 moves to a layer L2.

As illustrated in FIG. 9, the layer L1 is served to the first master object 140a and the first cluster 122a, and the layer L2 is served to the second master object 140b and the second cluster 122b. When the user terminal moves from the layer L1 to the layer L2 of a building, handover from the first cluster 122a to the second cluster 122b occurs in the user terminal.

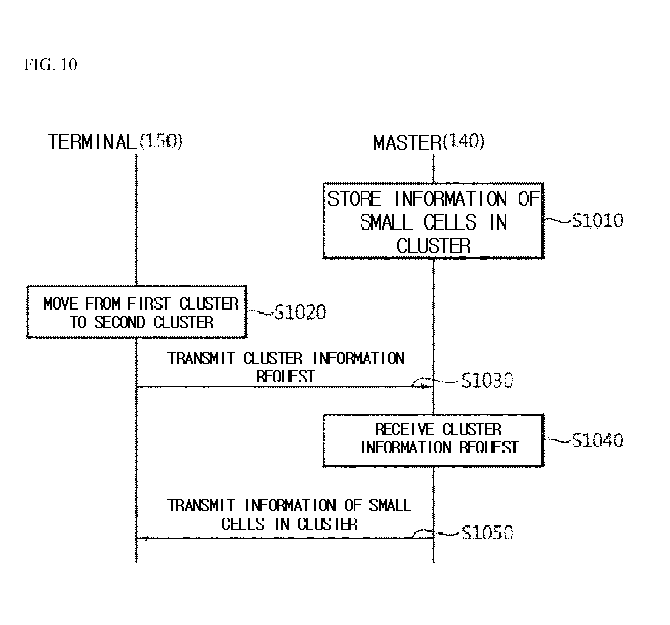

FIG. 10 is a flowchart illustrating a small cell discovery method according to another embodiment of the present invention. Referring to FIG. 10, a handover process will be described. A master object stores information of small cells in a cluster (S1010). A first master object 140a and a second master object 140b may pre-store information of the small cells that belong to the corresponding clusters. The first master object 140a and the second master object 140b may exchange data with each other through backbones 191a and 191b. For example, the first master object 140a and the second master object 140b may exchange information of each cluster through the backbones via a controller 190 of a network. A user terminal 150 moves from a first cluster 122a to a second cluster 122b (S1020). In this case, the user terminal may directly determine the occurrence of handover, or may receive the handover situation from the master object. Further, the terminal transmits a cluster information request message to the master object to which handover is to occur (S1030). In an example of FIG. 9, the master object to which the handover is to occur is the second master object 140b. The master object receives the cluster information request message from the user terminal (S1040). Then, the master object transmits the information of the small cells in the cluster to the user terminal (S1050). For example, the second master object 140b may receive the cluster information request message from the user terminal 150, and may transmit the information of the small cells in the second cluster 122b to the user terminal accordingly. The user terminal 150 may connect to a new small cell 121b using the received information of the small cells in the second cluster 122b.

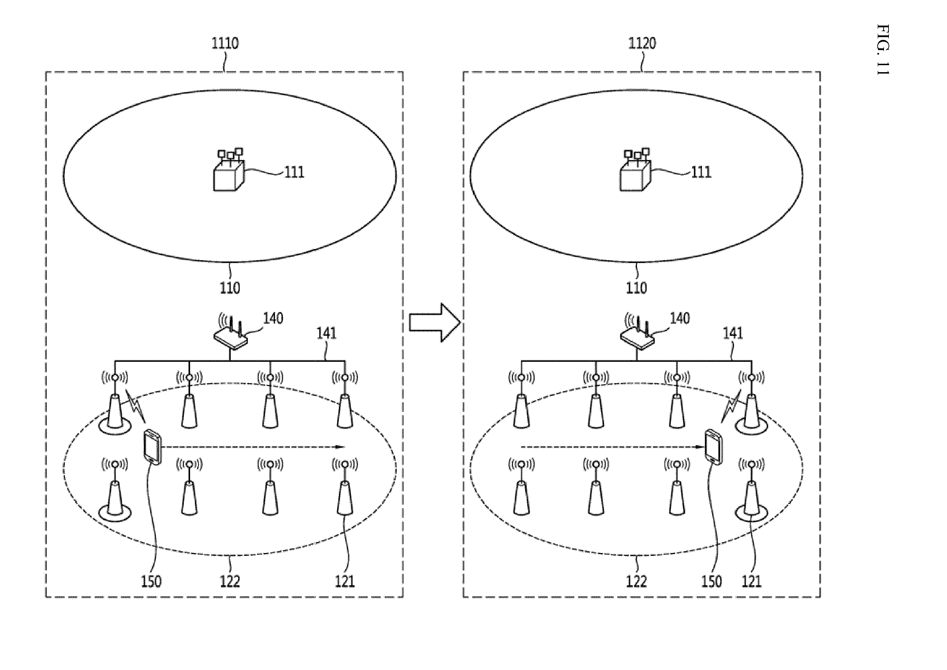

FIG. 11 is a conceptual diagram illustrating a small cell discovery method according to still another embodiment of the present invention. FIG. 11 illustrates an example in which a user terminal 150 moves from a first position 1110 to a second position 1120 to connect to another small cell in the same cluster 122 on the basis of scenario 2b as described above. The macro cell 110 and the small cells 121 in the cluster 122 in the first position 1110 and in the second position 1120 have the same deployment. FIG. 11 illustrates that the coverage of the macro cell and the small cells is separated into frequency bands, and as in the explanation of the scenario 2b as described above, the coverage of the small cells 121 is overlaid in the coverage of the macro cell 110.

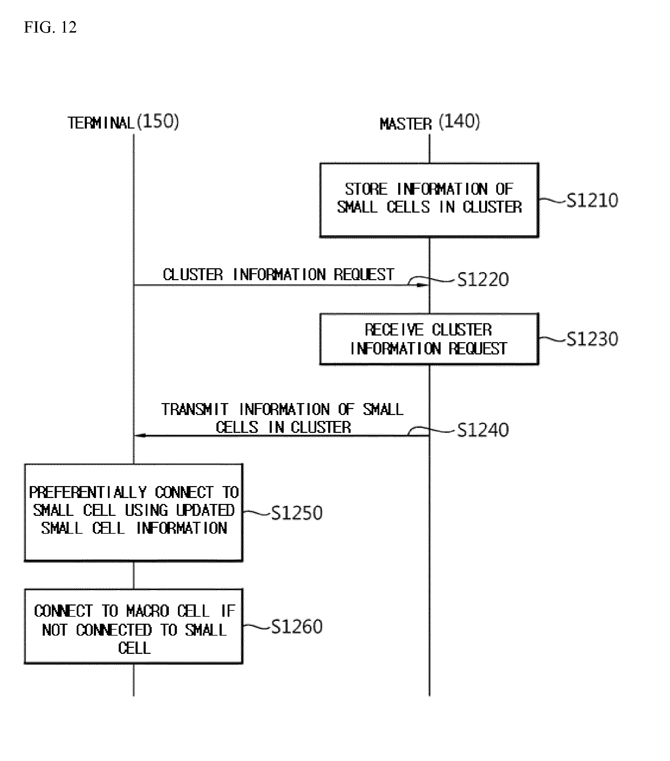

FIG. 12 is a flowchart illustrating a small cell discovery method according to still another embodiment of the present invention. Referring to FIG. 12, a master object first stores information of small cells in a cluster (S1210). If a user moves from a first position 1110 to a second position 1120, the strength of a signal that a user terminal 150 receives from the small cell connected in the first position becomes weakened, and the user terminal receives a strong signal of another neighboring small cell. Accordingly, the user terminal requests cluster information from the master object to achieve connection with a new small cell (S1220). The master object receives the cluster information request from the user terminal 150 (S1230). The master object 140 transmits the information of the small cells in the cluster to the user terminal 150 (S1240). The user terminal 150 preferentially attempts connection to the small cells rather than the macro cell (S1250). The user terminal performs connection to the macro cell only in the case where the connection to the small cell is not performed (S1260).

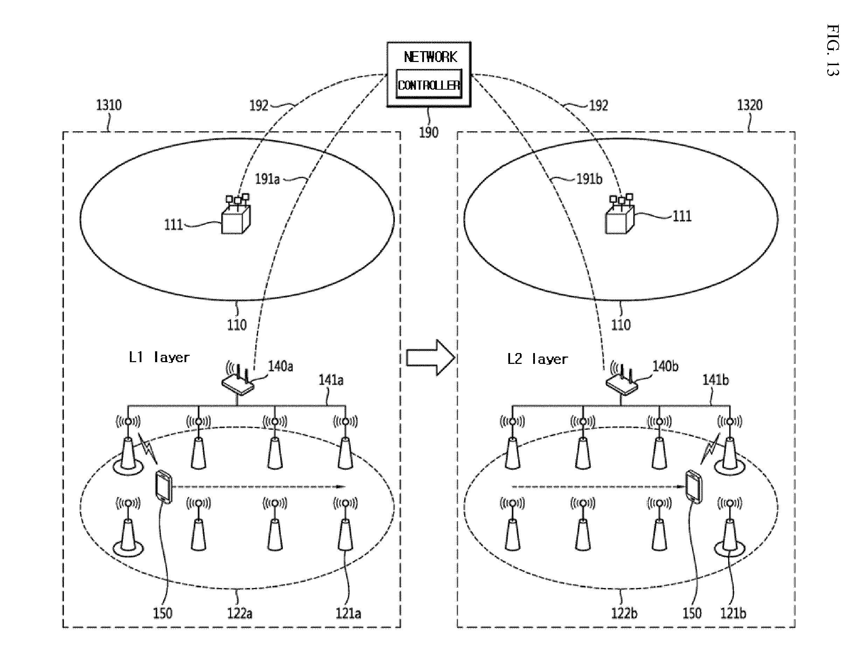

FIG. 13 is a conceptual diagram illustrating a small cell discovery method according to yet still another embodiment of the present invention. The fourth embodiment corresponds to an example of a small cell discovery method that is applied when a user terminal moves to a new cluster to change the connected small cell cluster based on the scenario 2b as described above. FIG. 13 illustrates deployment of a macro cell 110, a first master object 140a, and a first cluster 122a of small cells 121a in a situation 1310 that the user terminal 150 is positioned on a layer L1, and illustrates deployment of the macro cell 110, a second master object 140b, and a second cluster 122b of small cells 121b in a situation 1320 that the user terminal 150 moves to a layer L2. The macro cells 110 on the layers L1 and L2 may be different from each other.

The macro cell 110 is connected to a controller 190 of a network to exchange data with each other. The first master object 140a is connected to the controller 190 of the network through a first backbone 191a, and the second master object 140b is connected to the controller 190 of the network through a second backbone 191b. The first master object 140a and the second master object 140b may exchange data with each other through the backbones by the controller of the network. For example, the first master object 140a and the second master object 140b may exchange small cell information of the corresponding small cell clusters

As illustrated in FIG. 13, the layer L1 is served to the macro cell 110, the first master object 140a, and the first cluster 122a, and the layer L2 is served to the macro cell 110, the second master object 140b, and the second cluster 122b. When the user terminal moves from the layer L1 to the layer L2 of the building, the macro cells 110 are the same, but the clusters become different from each other. In this case, handover from the first cluster 122a to the second cluster 122b occurs in the user terminal.

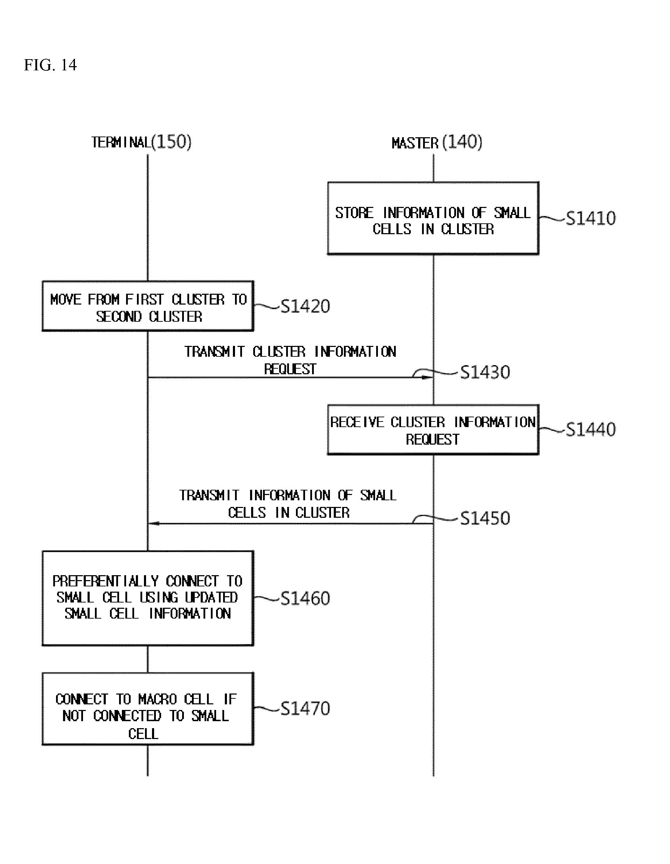

FIG. 14 is a flowchart illustrating a small cell discovery method according to yet still another embodiment of the present invention. Referring to FIG. 14, a handover process will be described. A master object stores information of small cells in a cluster (S1410). A first master object 140a and a second master object 140b may pre-store information of the small cells that belong to the corresponding clusters. A user terminal moves from a first cluster 122a to a second cluster 122b (S1420). Accordingly, handover occurs in the user terminal. The user terminal may directly determine the occurrence of handover, or may receive the handover situation from the master object. Further, the terminal transmits a cluster information request message to the master object 140b to which handover is to occur (S1430). In an example of FIG. 13, the master object of the second cluster 122b, to which the handover is to occur, is the second master object 140b. The master object 140b receives the cluster information request message from the user terminal (S1440). Then, the master object transmits the information of the small cells in the cluster to the user terminal (S1450). For example, the second master object 140b may receive the cluster information request message from the user terminal 150, and may transmit the information of the small cells 121b in the second cluster 122b to the user terminal accordingly. The user terminal preferentially attempts connection to the small cells rather than the macro cell using the updated information of the small cells (S1460). The user terminal performs connection to the macro cell only in the case where the connection to the small cell is not performed (S1470).

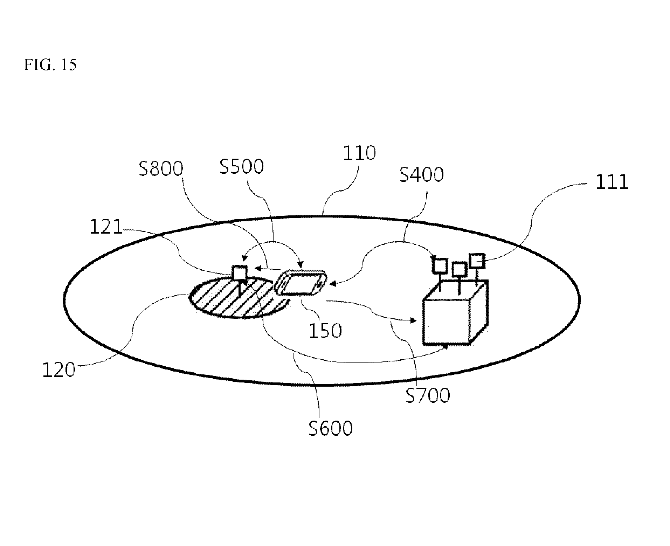

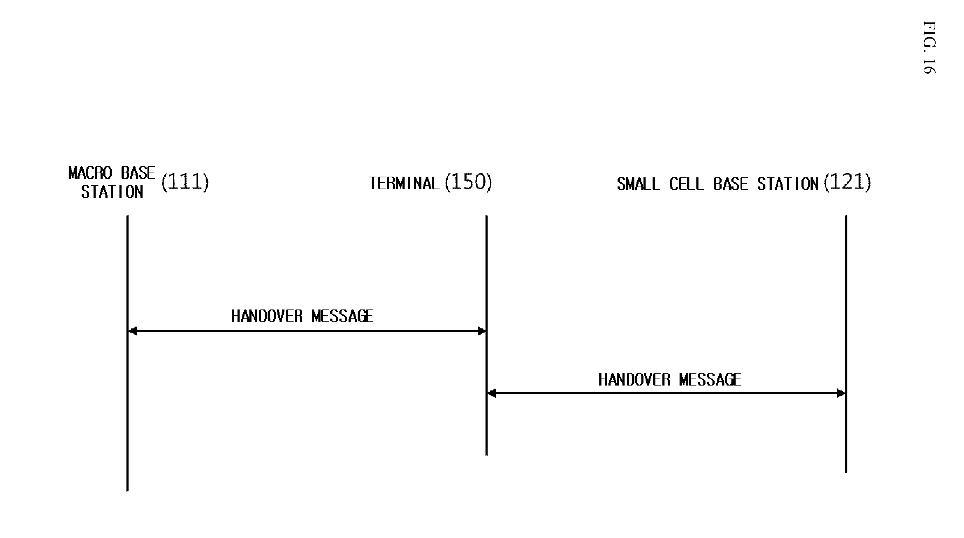

FIG. 15 is a configuration diagram in which a macro base station 111 and a small cell base station 121 provide LTE services to a user terminal 150 according to yet still another embodiment of the present invention, and FIG. 16 is a timing diagram explaining FIG. 15 in detail.

Hereinafter, referring to FIGS. 15 and 16, a method for transceiving a handover message during connection of a plurality of LTE base stations according to yet still another embodiment of the present invention will be described.

First, referring to FIG. 15, a user terminal 150 is connected to at least one of a macro base station 111 that provides an LTE service in a macro cell and a small cell base station 121 that provides the LTE service in a small cell to receive the LTE service, and the selection thereof is automatically controlled.

That is, in the case where the user terminal 150 and one base station provide the service, the small cell base station 121 becomes a base station that assists the macro base station 111 when the macro base station 111 provide the service to the user terminal 150, and in the case where the small cell base station 121 provides the service to the user terminal 150, the macro base station 111 becomes a base station that assists the small cell base station 121.

In the case where the macro base station 111 and the small cell base station 121 simultaneously provide the services, the small cell base station 121 mainly possesses wireless resources, and mainly takes charge of wireless resource allocation of a cell that belongs to the small cell base station 121. Such wireless resource allocation is performed through communication between the macro base station 111 and the small cell base station 121.

Generation of a wireless resource control message is classified into a first option in which the macro base station 111 generates the wireless resource control message and a second option in which the small cell base station 121 generates the wireless resource control message.

For example, if an initial wireless resource control message is generated from the small cell base station 121 in the first option, the macro base station 111 provides wireless resource environment setting of the user terminal 150 and a transmittable capacity of the user terminal 150 to the small cell base station 121.

The small cell base station 121 determines an appropriate variable among data that is provided from the macro base station 111 and replies to the macro base station 111. In this case, the macro base station 111 generates a first wireless resource control message S400 based on the variable transmitted from the small cell base station 121 and sends the generated message to the user terminal 150.

If the initial wireless resource control message is generated from the small cell base station 121 in the second option, the macro base station 111 provides wireless resource environment setting of the user terminal 150 and a transmittable capacity of the user terminal 150 to the small cell base station 121.

The small cell base station 121 determines an appropriate variable among data that is provided from the macro base station 111, generates a second wireless resource control message S500 to send the generated message to the user terminal 150, and then transmits the result to the macro base station 111.

On the other hand, a protocol S600 between base stations is to perform communication between the macro base station 111 and the small cell base station 121. Through the protocol, information on setting, maintenance, and cancellation of the user terminal 150 is exchanged, routing of user plane of the user terminal 150 is controlled, and wireless environment setting information of the user terminal 150 is exchanged.

In order for the macro base station 111 and the small cell base station 121 to simultaneously provide services, the macro base station 111 maintains the wireless resource management message information of the user terminal 150, and through a request from the macro base station 111, the small cell base station 121 generates additional information. The macro base station 111 and the small cell base station 121 exchange such information with each other. The small cell base station 121 may reset the existing service cell, but the macro base station 111 maintains the provided wireless resource control message environment setting information without changing the same.

FIG. 16 is a timing diagram illustrating in detail a handover message that a user terminal 150 of FIG. 15 transceives with a macro base station 111 and a small cell base station 121. The cell discovery method in a small cell cluster using a master object includes a user terminal, which is connected to at least one of a macro base station 111 that provides an LTE service in a macro cell and a small cell base station 121 that provides the LTE service in a small cell to receive the LTE service, transceiving a handover message through any one of the macro base station 111 and the small cell base station 121.

In a first option, the macro base station 111 transmits neighboring base station information to the user terminal 150. The user terminal 150 scans base stations to which handover is possible on the basis of the neighboring base station information that is transmitted from the macro base station 111, and transmits a base station ID having superior reception quality to the base station 111.

The macro base station 111 communicates with the base station to which the user terminal 150 desires to make handover, receives whether wireless resource allocation is possible, and notifies the user terminal 150 of whether wireless resource allocation is possible. If the wireless resource allocation is possible, the user terminal connects to the base station to which the user terminal desires to make handover, and terminates the communication with the macro base station 111 to finish the handover.

In this case, the macro base station 111 continuously notifies the small cell base station 121 of the result of the communication related to the handover, and thus the user terminal 150 can also terminate the communication with the small cell base station 121.

Similarly, in a second option, the small cell station 121 transmits neighboring base station information to the user terminal 150. The user terminal 150 scans base stations to which handover is possible on the basis of the neighboring base station information that is transmitted from the small cell station 121, and transmits a base station ID having superior reception quality to the macro base station 111.

The small cell station 121 communicates with the base station to which the user terminal 150 desires to make handover, receives whether wireless resource allocation is possible, and notifies the user terminal 150 of whether wireless resource allocation is possible. If the wireless resource allocation is possible, the user terminal connects to the base station to which the user terminal desires to make handover, and terminates the communication with the small cell station 121 to finish the handover.

In this case, the small cell station 121 continuously notifies the macro base station 111 of the result of the communication related to the handover, and thus the user terminal 150 can also terminate the communication with the macro base station 111.

As another method, in the second option, if the macro base station 111 performs communication with the base station to which the handover is desired, the small cell base station 121 transmits the base station ID, to which the user terminal 150 desires to make handover, to the macro base station 111, and the macro base station 111 communicates with the base station, to which the user terminal 150 desires to make handover. Accordingly, the macro base station 111 receives whether the wireless resource allocation is possible, and notifies the user terminal 150 of the received information through the small cell base station 121. If the wireless resource allocation is possible, the macro base station connects to the base station to which the handover is desired, and terminates the communication with the small cell base station 121 to finish the handover.

In this case, the small cell base station 121 continuously notifies the macro base station 111 of the result of the communication related to the handover, so that the user terminal 150 can terminate the communication with the macro base station 111.

Although the present invention has been described with reference to the above-described embodiments, it will be understood by those of ordinary skill in the art to which the present invention pertains that various modifications and changes in form and detail may be made therein without departing from the spirit and scope of the invention.

## Claims

1. A method for transceiving a handover message during connection of a plurality of LTE base stations, comprising:
storing information of small cells in a small cell cluster;
receiving a request for cluster information from a terminal; and
transmitting the information of the small cells in the cluster to the terminal.

2. The method according to claim 1, wherein the providing of the small cell information is performed by a master object of the small cell cluster.

3. A method for transceiving a handover message during connection of a plurality of LTE base stations in a cell discovery method in a small cell cluster that is composed of a plurality of small cells and a master object, comprising:
a terminal receiving information of the small cells in the small cell cluster; and
the terminal connecting to the small cell in the cluster using the information of the small cells.

4. The method according to claim 3, wherein the receiving of the information of the small cells in the small cell cluster comprises receiving the information of the small cells from the master object of the small cell cluster.

5. The method according to claim 3, wherein the connecting to the small cell in the cluster using the information of the small cell comprises connecting to the small cell in the cluster in preference to a macro cell.

6. A method for transceiving a handover message during connection of a plurality of LTE base stations, comprising:
a user terminal, which is connected to at least one of a macro base station that provides an LTE service in a macro cell and a small cell base station that provides the LTE service in a small cell to receive the LTE service, transceiving a handover message through any one of the macro base station and the small cell base station.
